# EUROPEAN PATENT SPECIFICATION

(11) **EP 3 702 076 B1**
(45) Date of publication and mention of the grant of the patent: **21.02.2024**
(21) Application number: 19215198.3
(22) Date of filing: 11.12.2019
(51) Int. Cl.: B23B 31/11, B23B 31/107, B23B 51/12, F16B 7/04

(54) **CUTTER HOLDER STRUCTURE**
SCHNEIDERHALTERSTRUKTUR
STRUCTURE DE SUPPORT DE COUPE

(30) Priority: 27.02.2019 TW 108106708; 17.05.2019 TW 108116994
(43) Date of publication of application: 02.09.2020
(73) Proprietor: Chang, Hsin-Tien, Taichung City (TW)
(72) Inventor: Chang, Hsin-Tien, Taichung City (TW)
(74) Representative: Viering, Jentschura & Partner mbB Patent- und Rechtsanwälte

(56) References cited:
- EP-A1- 0 378 688
- EP-A1- 0 547 049
- CN-A- 109 226 797
- DE-A1-102005 015 787
- US-A- 1 018 096
- US-A1- 2016 332 241

## Description

### FIELD OF THE INVENTION

The present invention relates to a cutter holder structure that has a high locking rigidity and can be applicable to different cutters with the same cutter arbor.

### BACKGROUND OF THE INVENTION

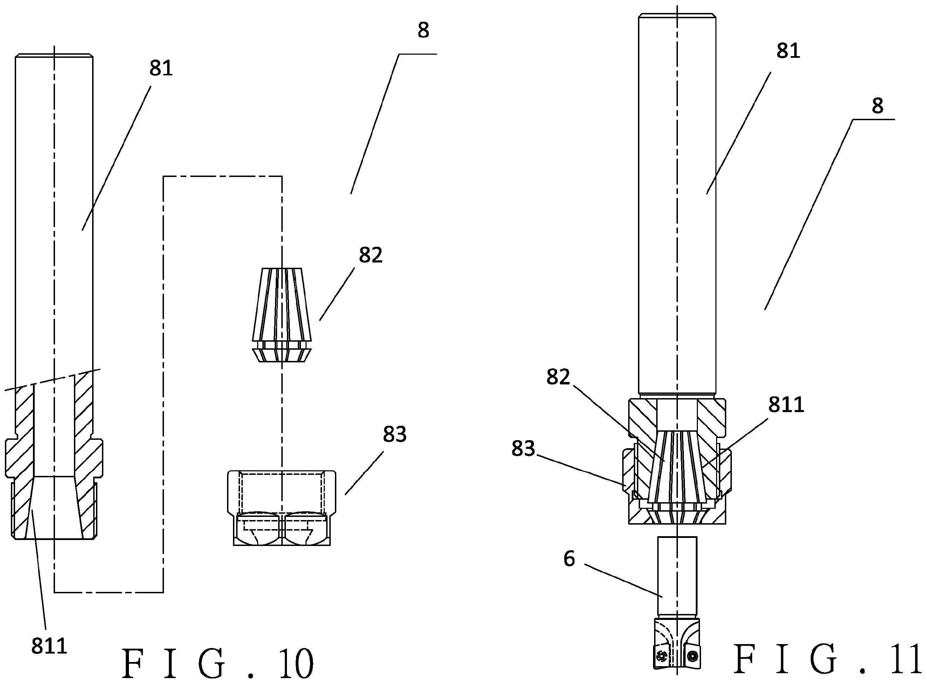

Generally, a cutter holder has a collet. As shown in FIG. 10 and FIG. 11, a straight shank cutter holder with an ER collet is mainly used for a power cutter of a machine tool or mounted to the spindle of a machine tool. The cutter holder (8) mainly comprises a cutter arbor (81). The front end of the cutter arbor (81) is provided with a clamping structure. The clamping structure comprises an inner tapered hole (811) at the front end of the cutter arbor (81) to accommodate a collet (82) therein. The collet (82) is configured to receive a straight shank cutter (6), such as a milling cutter, a drill bit, a tapping cutter, etc., and the cutter (6) is locked by a nut (83). The nut (83) forces the collet (82) to retract inward and clamp the cutter (6), thereby quickly mounting and dismounting the cutter (6). Referring to FIG. 11, an ER16 collet is taken as an example, which can clamp the cutter (6) with a shank having a diameter of 1-10mm. Each type of collet (82) is retracted in a limited range for clamping the cutter, so the size of the shank of the cutter is subject to the collet. The maximum size for this collet to clamp a cutter is 10mm, so the application range of a single collet (82) is limited. For a more complex and diverse machining environment, users have to purchase more collets (82) of different sizes for fast-changing and diverse machining.

As to the conventional cutter holder (8) having the collet (82), the clamping structure designed at its front end includes the collet (82) as a main clamping mechanism and the cutter arbor (81) in cooperation with the nut (83) to lock the cutter (6). However, each type of collet (82) is retracted in a limited range for clamping the cutter. Users have to purchase more collets (82) of different sizes, which increases the machining cost. It is an object of the present invention to solve these problems.

Another configuration of a cutter holder structure is disclosed in CN 109 226 797 A.

### SUMMARY OF THE INVENTION

According to the present invention, a cutter holder structure according to claim 1 is provided. Preferred embodiments of such a cutter holder structure are the subject-matters of the dependent claims.

The primary object of the present invention is to provide a cutter holder structure, comprising a cutter arbor, a connecting shaft, and a nut. The cutter arbor has a through hole therein. A front end of the through hole is formed with an inner tapered hole. One end of the cutter arbor is provided with an external thread. The connecting shaft has a tapered section at one end thereof. The tapered section corresponds to the inner tapered hole of the cutter arbor. One end of the tapered section is formed with a first inner screw hole for locking a set screw. Another end of the connecting shaft is formed with a second inner screw hole. The connecting shaft further has a horizontal positioning hole that penetrates through the connecting shaft and is adjacent to the tapered section. Two ends of the positioning hole are formed with cylindrical holes. A reduced hole is defined between the cylindrical holes at the two ends of the positioning hole. Two ends of the reduced hole are connected to the cylindrical holes. The reduced hole may be in a circular arc shape. The reduced hole between the two cylindrical holes may be a positioning cylindrical hole. The nut has a third inner screw hole at one end and an axial hole at another end. The nut further has a horizontal countersink hole and a horizontal fourth inner screw hole. An eccentric distance is defined between a center of the countersink hole and a center of the fourth inner screw hole. The eccentric distance is preferably about 0.05-0.1mm. A screw is inserted through the countersink hole and locked into the fourth inner screw hole.

If the cutter arbor is a cutter arbor used for connecting an ER16 collet (10mm), the maximum size of a cutter to be connected to the connecting shaft is 16mm, so that the application range of the size of the cutter is thus increased by 60% by the cutter holder structure of the present invention. As mentioned above, the positioning hole may be a positioning cylindrical hole that is in tight contact with the screw to improve the rigidity. The maximum size of a cutter to be connected to the connecting shaft may be 30mm, and the application range of the size of the cutter is therefore increased by 3 times. In addition, the length of the connecting shaft may be changed, which can increase the application range of the machining and make the machining more flexible.

### BRIEF DESCRIPTION OF THE DRAWINGS

FIG. 1 is an exploded view of the present invention;
FIG. 2 is an assembled cross-sectional view of the present invention;
FIG. 3 is a schematic view of an exemplary embodiment of a different nut of the present invention;
FIG. 4 is a cross-sectional view of the present invention, showing the reduced hole in a circular arc shape of the connecting shaft;
FIG. 5 is a schematic view of an exemplary embodiment of different cutters coupled to the present invention;
FIG. 6 is a schematic view of an exemplary embodiment of the connecting shaft of the present invention;
FIG. 7 is an exploded sectional view of the present invention, showing that the reduced hole of the connecting shaft is a cylindrical hole;
FIG. 8 is an assembled sectional view of the present invention, showing that the reduced hole of the connecting shaft is a cylindrical hole;
FIG. 9 is a schematic view of the present invention with various nuts in cooperation with cutters having different cutting functions;
FIG. 10 is an exploded sectional view of a conventional straight shank cutter holder with an ER collet; and
FIG. 11 is an assembled sectional view of the conventional straight shank cutter holder with the ER collet.

### DETAILED DESCRIPTION OF THE PREFERRED EMBODIMENTS

Embodiments of the present invention will now be described, by way of example only, with reference to the accompanying drawings.

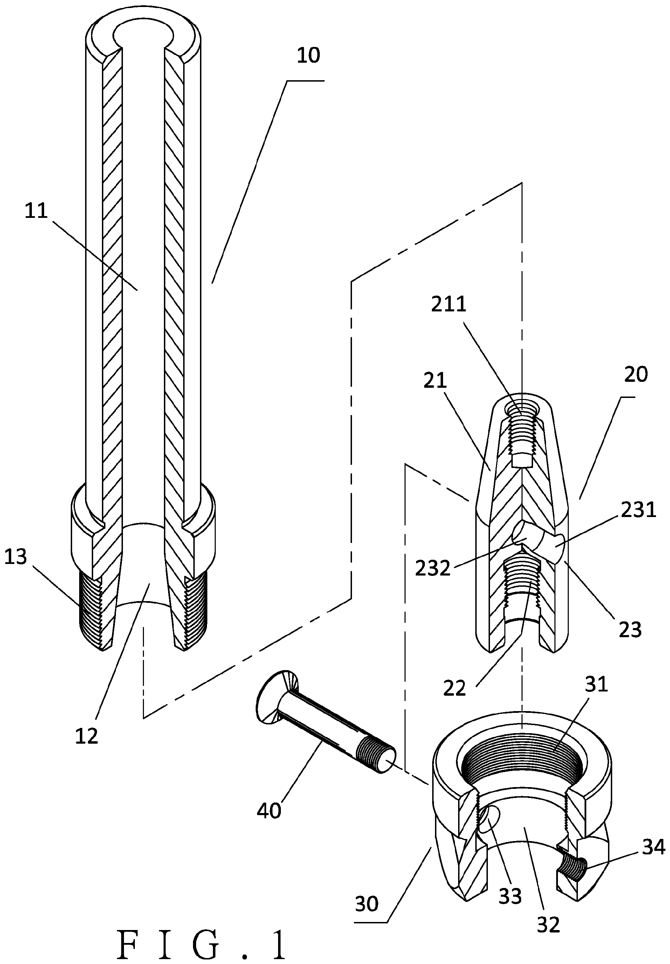

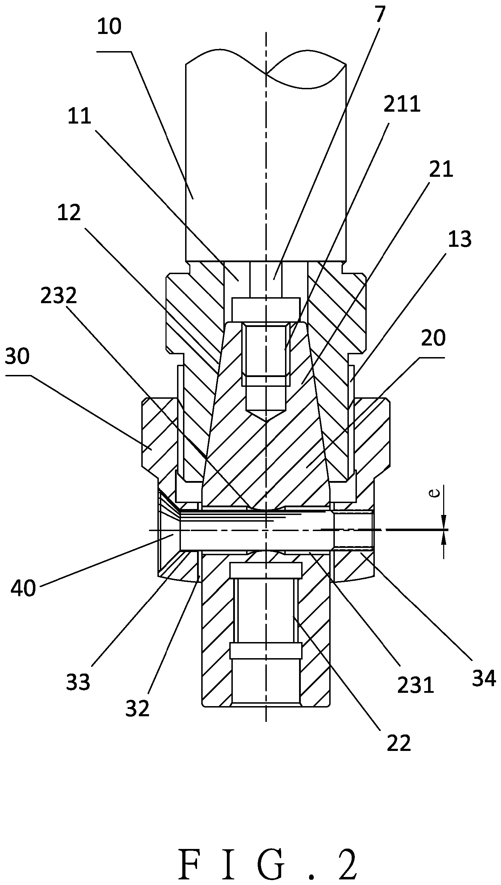

Referring to FIG. 1 and FIG. 2, the cutter holder structure of the present invention comprises a cutter arbor (10), a connecting shaft (20) and a nut (30). The cutter arbor (10), such as a commercially available straight or tapered cutter arbor, has a through hole (11) therein. The front end of the through hole (11) is formed with an inner tapered hole (12). One end of the cutter arbor (10) is provided with an external thread (13).

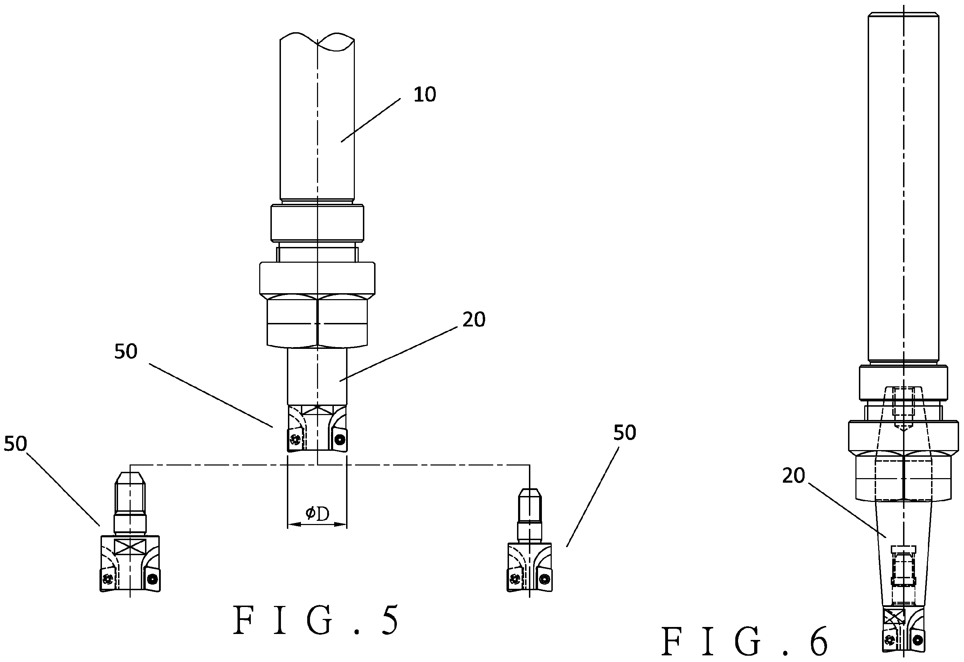

The connecting shaft (20) has a tapered section (21) at one end thereof. The tapered section (21) corresponds to the inner tapered hole (12) of the cutter arbor (10). One end of the tapered section (21) is formed with a first inner screw hole (211) for locking a set screw (7). Another end of the connecting shaft (20) is formed with a second inner screw hole (22) for locking a cutter (50), such as a milling cutter, a drill bit, etc. (as shown in FIG. 5). The connecting shaft (20) has a horizontal positioning hole (23) that penetrates through the connecting shaft (20) and is adjacent to the tapered section (21). Two ends of the positioning hole (23) are formed with cylindrical holes (231). The diameter of the cylindrical hole (231) is greater than the shaft diameter of a screw (40) by about 20%, so that the screw (40) has a greater movable space when it is accommodated in the cylindrical hole (231). A reduced hole (232) is defined between the cylindrical holes (231) at the two ends of the positioning hole (23). The diameter of the middle portion of the reduced hole (232) is the smallest. The diameter of the reduced hole (232) is greater than the shaft diameter of the screw (40) by about 0.1mm or less. The diameter of two ends of the reduced hole (232) is the largest. The two ends of the reduced hole (232) are connected to the cylindrical holes (231). The reduced hole (232) is in a circular arc shape.

The nut (30) has a third inner screw hole (31) at one end and an axial hole (32) at another end. The nut (30) further has a horizontal countersink hole (33) and a horizontal fourth inner screw hole (34). An eccentric distance (e) is defined between the center of the countersink hole (33) and the center of the fourth inner screw hole (34). The eccentric distance (e) is about 0.05-0.1mm according to this embodiment. The fourth inner screw hole (34) is higher than the countersink hole (33).

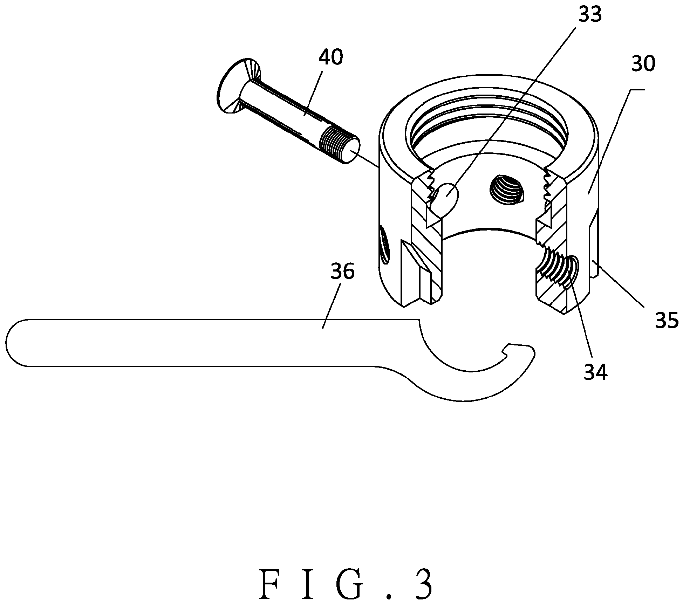

Referring to FIG. 1, the nut (30) of the cutter holder structure of the present invention may be a hexagonal nut, and it may be in different shapes. As shown in FIG. 3, the outer circumference of the nut (30) is formed with a plurality of grooves (35), and the nut (30) is tightened or loosened by a wrench (36). In addition, the countersink hole (33) and the fourth inner screw hole (34) of the nut (30) may be more than one set and annularly arranged on the outer circumference of the nut (30).

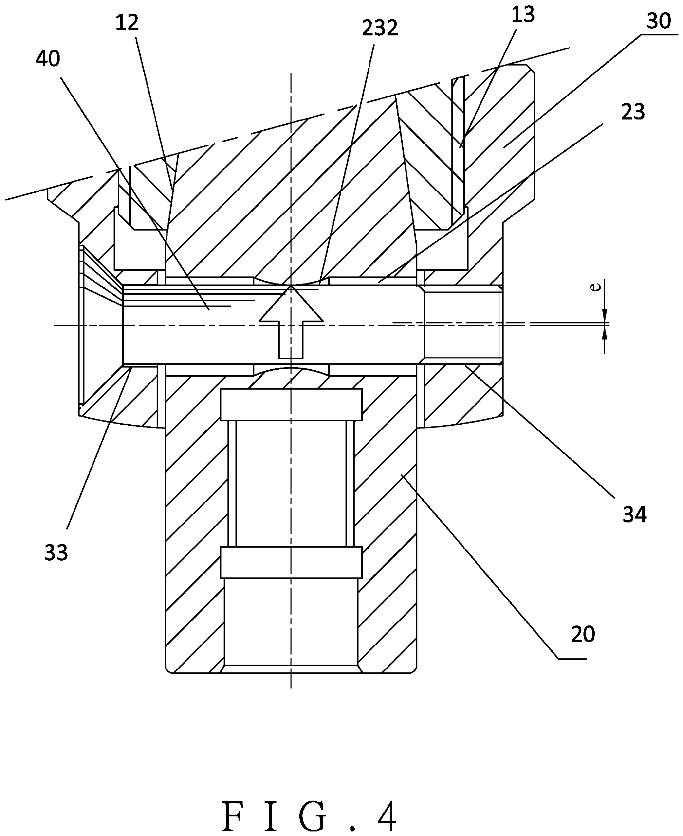

Referring to FIG. 2 and FIG. 4, the connecting shaft (20) of the present invention is inserted in the nut (30), and the positioning hole (23) is aligned with the countersink hole (33) and the fourth inner screw hole (34) of the nut (30), and the screw (40) is inserted in the holes and locked. An eccentric distance (e) is defined between the center of the countersink hole (33) and the center of the fourth inner screw hole (34), the eccentric distance (e) is about 0.05-0.1mm according to this embodiment, wherein the fourth inner screw hole (34) is higher than the countersink hole (33). When the screw (40) is gradually locked into the fourth inner screw hole (34) that is higher than the countersink hole (33), the screw (40) is deflected upward (slightly deflected in a clockwise direction) with the fourth inner screw hole (34) as a fulcrum, and the screw (40) gradually pushes up the reduced hole (232) of the connecting shaft (20). The reduced hole (232) is in a circular arc shape, so the screw (40) is in contact with the reduced hole (232) with a single point to push the connecting shaft (20) up. The nut (30) is locked to the external thread (13) of the cutter arbor (10) and pushes up the connecting shaft (20) through the inner tapered hole (12) of the cutter arbor (10) to connect with the cutter arbor (10). Accordingly, the connecting shaft (20) is pushed by the screw (40) and is pushed upward by the nut (30) to achieve a double locking effect.

As shown in FIG. 5, the present invention changes the structure of the cutter arbor. The connecting shaft (20) can be connected with cutters (50) of different sizes. According to this embodiment, if the cutter arbor (10) is a cutter arbor used for connecting an ER16 collet, the maximum sizeψD of a cutter to be connected to the cutter arbor (10) is 16mm, so that the application range of the size ψD of the cutter is thus increased by 60%. In addition, as shown in FIG. 6, the length of the connecting shaft (20) may be changed, so as to increase the application range for machining.

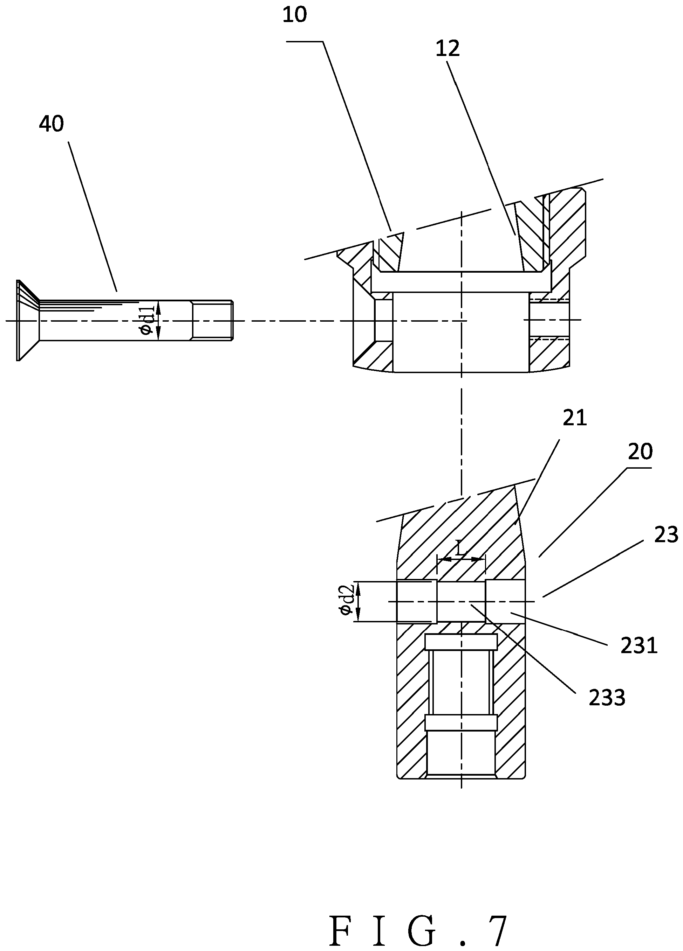

According to the aforesaid, if the cutter arbor (10) is a cutter arbor used for connecting an ER16 collet, the maximum sizeψD of a cutter to be connected to the cutter arbor (10) is 16mm, which is based on the locking rigidity of the connecting shaft (20) and the nut (30). If it is necessary to increase the maximum size ψD of the cutter, the locking rigidity of the connecting shaft (20) and the nut (30) can be increased. Referring to FIG. 7, the connecting shaft (20) has the horizontal positioning hole (23) adjacent to the tapered section (21). The two ends of the positioning hole (23) are formed with the cylindrical holes (231) having a diameter greater than the diameterψ(d1) of the screw (40). Between the cylindrical holes (231) is a positioning cylindrical hole (233) having a small diameterψ(d2), which is different from the aforementioned reduced hole (232). The diameterψ(d2) of the positioning cylindrical hole (233) is greater than the diameterψ(d1) of the screw (40). The tolerance of the diameter is between 0 and 0.05mm, so that the screw (40) is in tight contact with the positioning cylindrical hole (233). The positioning cylindrical hole (233) and the screw (40) will be tightly fitted.

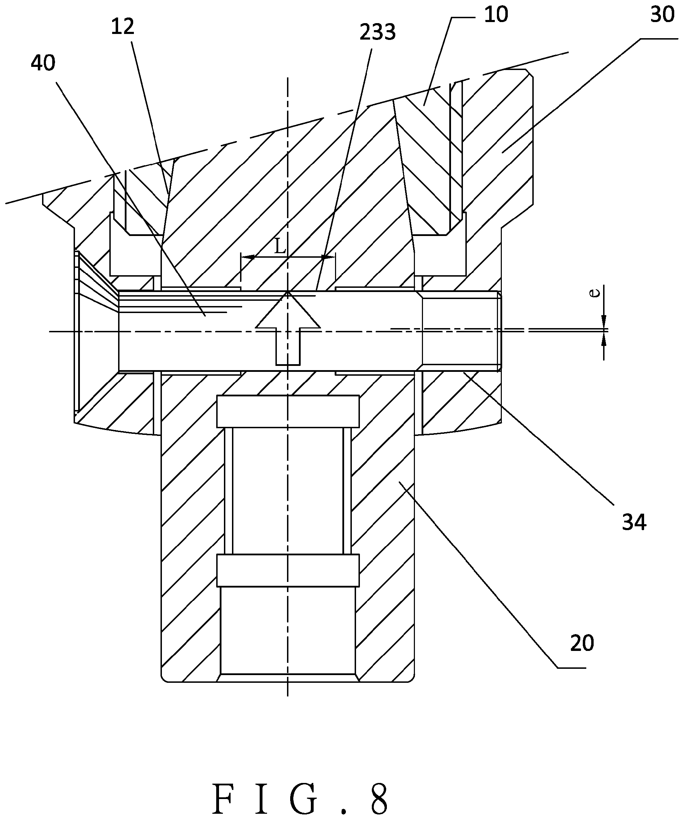

Referring to FIG. 8, when the screw (40) is screwed into the fourth inner screw hole (34) that is eccentrically arranged, the screw (40) will push the connecting shaft (20) up at the positioning cylindrical hole (233), so that the connecting shaft (20) is more closely fitted with the inner tapered hole (12) of the cutter arbor (10), and the positioning cylindrical hole (233) has a larger contact area with the screw (40). As shown in FIG. 7, the length (L) of the positioning cylindrical hole (233) is the contact length with the screw (40). The longer the contact length (L), the tighter fit. Therefore, the locking rigidity of the connecting shaft (20) and the inner tapered hole (12) of the cutter arbor (10) is increased, which will relatively increase the cutting rigidity of the cutter, thereby increasing the maximum size ψD of the cutter. According to the actual cutting experiment, if the cutter arbor (10) is a cutter arbor used for connecting an ER16 collet (10mm), the maximum sizeψD of a cutter to be connected to the cutter arbor (10) may be 30mm, and the application range of the size ψD of the cutter is therefore increased by 3 times.

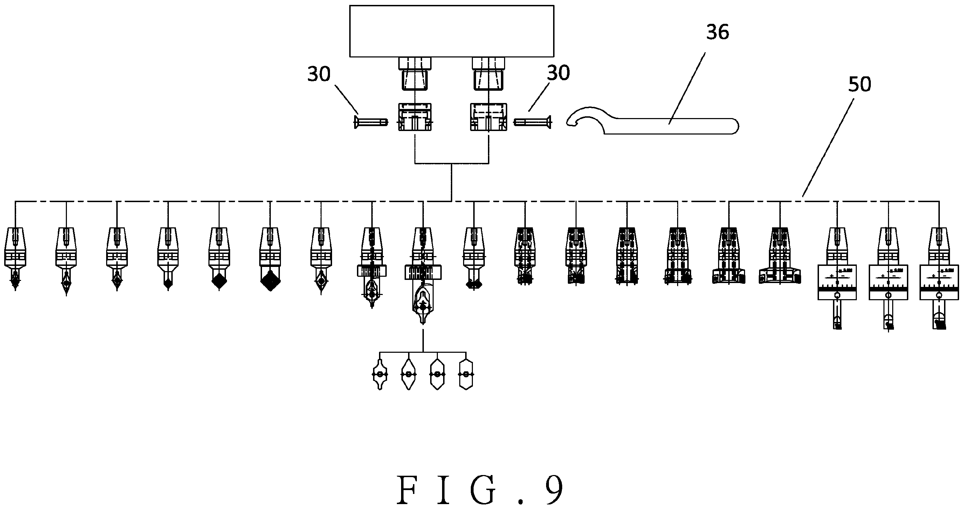

Referring to FIG. 9, the present invention can be combined with various nuts (30) to lock or unlock cutters (50) with different cutting functions through a wrench (36), so it can be widely used and is very practical.

In summary, the cutter holder structure of the present invention changes the traditional technique using the collet to clamp the cutter, by providing a screw to connect the connecting shaft and the of the nut. The locking rigidity is better, and the connecting shaft is used for locking cutters of different sizes. The application range of the cutters increases 1.6-3 times.

The present invention can improve the cutting range of the cutter, meeting the requirements of cutting conditions and environment for various workpieces.

Although particular embodiments of the present invention have been described in detail for purposes of illustration, various modifications and enhancements may be made without departing from the scope of the present invention as defined by the appended claims.

## Claims

1. A cutter holder structure, comprising:
a cutter arbor (10), having a through hole (11) therein, one end of the through hole (11) being formed with an inner tapered hole (12), one end of the cutter arbor (10) being provided with an external thread (13);
a connecting shaft (20), having a tapered section (21) at one end thereof, the tapered section (21) corresponding to the inner tapered hole (12) of the cutter arbor (10), one end of the tapered section (21) being formed with a first inner screw hole (211) for locking a set screw (7), another end of the connecting shaft (20) being formed with a second inner screw hole (22), the connecting shaft (20) further having a horizontal positioning hole (23) that penetrates through the connecting shaft (20) and is adjacent to the tapered section (21), two ends of the positioning hole (23) being formed with cylindrical holes (231), a reduced hole (232) being defined between the cylindrical holes (231) at the two ends of the positioning hole (23), two ends of the reduced hole (232) being connected to the cylindrical holes (231);
a nut (30), having a third inner screw hole (31) at one end and an axial hole (32) at another end, the nut (30) further having a horizontal countersink hole (33) and a horizontal fourth inner screw hole (34), an eccentric distance (e) being defined between a center of the countersink hole (33) and a center of the fourth inner screw hole (34);
a screw (40), inserted through the countersink hole (33) and locked into the fourth inner screw hole (34).

2. The cutter holder structure as claimed in claim 1, wherein the cylindrical holes (231) at the two ends of the positioning hole (23) of the connecting shaft (20) each have a diameter greater than a shaft diameter of a screw (40) by about 20%.

3. The cutter holder structure as claimed in claim 1, wherein a middle portion of the reduced hole (232) having a diameter greater than a shaft diameter of the screw (40) by about 0.1mm or less.

4. The cutter holder structure as claimed in claim 1, wherein the reduced hole (232) is a positioning cylindrical hole.

5. The cutter holder structure as claimed in claim 1, wherein the reduced hole (232) is in a circular arc shape.

6. The cutter holder structure as claimed in claim 1, wherein the eccentric distance (e) between the center of the countersink hole (33) and the center of the fourth inner screw hole (34) is about 0.05-0.1mm, and the fourth inner screw hole (34) is higher than the countersink hole (33).

## Patentansprüche

1. Eine Struktur des Schneideisenhalters, umfassend:
einen Fräsdorn (10) mit einem Durchgangsloch (11), wobei ein Ende des Durchgangslochs (11) mit einem verjüngten Innenloch (12) gebildet ist, während ein Ende des Fräsdorns (10) mit einem Außengewinde (13) versehen ist;
einen Verbindungsschaft (20), der an einem Ende einen verjüngten Teil (21) aufweist, wobei der verjüngte Teil (21) dem verjüngten Innenloch (12) des Fräsdorns (10) entspricht, ein Ende des verjüngten Teils (21) mit einem ersten inneren Schraubenloch (211) zur Befestigung einer Stellschraube (7) versehen ist, ein anderes Ende des Verbindungsschafts (20) mit einem zweiten inneren Schraubenloch (22) versehen ist, der Verbindungsschaft (20) weiter ein horizontales Positionierloch (23) aufweist, das durch den Verbindungsschaft (20) führt und am verjüngten Teil (21) angrenzt, zwei Enden des Positionierlochs (23) mit zylindrischen Löchern (231) versehen sind, ein verkleinertes Loch (232), das zwischen den zylindrischen Löchern (231) an den beiden Enden des Positionierlochs (23) gebildet ist, die beiden Enden des verkleinerten Lochs (232) mit den zylindrischen Löchern (231) verbunden sind,
eine Mutter (30), die an einem Ende ein drittes inneres Schraubenloch (31) und an einem anderen Ende ein Axialloch (32) aufweist, die Mutter (30) außerdem ein horizontales Senkbohrloch (33) und ein horizontales viertes inneres Schraubenloch (34) aufweist, ein exzentrischer Abstand (e), der zwischen einem Mittelpunkt des Senkbohrlochs (33) und einem Mittelpunkt des vierten inneren Schraubenlochs (34) definiert ist;
eine Schraube (40), die durch das Senkbohrloch (33) eingeführt und im vierten inneren Schraubenloch (34) verriegelt ist.

2. Die Struktur des Schneideisenhalters nach Anspruch 1, worin die zylindrischen Löcher (231) an den beiden Enden des Positionierlochs (23) des Verbindungsschafts (20) jeweils einen Durchmesser aufweisen, der um etwa 20% größer als der Schaftdurchmesser einer Schraube (40) ist.

3. Die Struktur des Schneideisenhalters nach Anspruch 1, wobei ein mittlerer Teil des verkleinerten Lochs (232) einen Durchmesser aufweist, der um etwa 0,1 mm oder weniger größer ist als der Schaftdurchmesser der Schraube (40).

4. Die Struktur des Schneideisenhalters nach Anspruch 1, wobei das verkleinerte Loch (232) ein zylindrisches Positionierloch ist.

5. Die Struktur des Schneideisenhalters nach Anspruch 1, wobei das verkleinerte Loch (232) die Form eines Kreises hat.

6. Die Struktur des Schneideisenhalters nach Anspruch 1, wobei der exzentrische Abstand (e) zwischen der Mitte des Senkbohrlochs (33) und der Mitte des vierten inneren Schraubenlochs (34) etwa 0,05-0,1 mm beträgt und das vierte innere Schraubenloch (34) höher als das Senkbohrloch (33) ist.

## Revendications

1. Structure de porte-outil, **caractérisée par le fait qu'**elle comprend :
un mandrin de fraisage (10), comprenant un trou traversant (11), une extrémité du trou traversant (11) ayant un trou conique intérieur (12), une extrémité du mandrin de fraisage (10) étant doté d'un filetage extérieur (13) ;
un arbre de liaison (20), comprenant une section conique (21) à l'une de ses extrémités, la section conique (21) correspondant au trou conique intérieur (12) du mandrin de fraisage (10), une extrémité de la section conique (21) ayant un premier trou de vis intérieur (211) pour le verrouillage d'une vis de réglage (7), une autre extrémité de l'arbre de liaison (20) ayant un deuxième trou de vis intérieur (22), l'arbre de liaison (20) comprenant en outre un trou de positionnement horizontal (23) qui pénètre à travers l'arbre de liaison (20) et est adjacent à la section conique (21), deux extrémités du trou de positionnement (23) ayant des trous cylindriques (231), un trou réduit (232) étant défini entre les trous cylindriques (231) aux deux extrémités du trou de positionnement (23), deux extrémités du trou réduit (232) étant reliées aux trous cylindriques (231) ;
un écrou (30), comprenant un troisième trou de vis intérieur (31) à une extrémité et un trou axial (32) à une autre extrémité, l'écrou (30) comprenant en outre un trou de fraisage horizontal (33) et un quatrième trou horizontal de vis intérieur (34), une distance excentrique (e) étant définie entre un centre du trou de fraisage (33) et un centre du quatrième trou de vis intérieur (34) ;
une vis (40), insérée à travers le trou de fraisage (33) et verrouillée dans le quatrième trou de vis intérieur (34).

2. Structure de porte-outil selon la revendication 1, **caractérisée par le fait que** les trous cylindriques (231) aux deux extrémités du trou de positionnement (23) de l'arbre de liaison (20) ont chacun un diamètre supérieur d'environ 20 % au diamètre de la tige d'une vis (40).

3. Structure de porte-outil selon la revendication 1, **caractérisée par le fait qu'**une partie médiane du trou réduit (232) comprenant un diamètre supérieur au diamètre de la tige de la vis (40) d'environ 0,1 mm ou moins.

4. Structure de porte-outil selon la revendication 1, **caractérisée par le fait que** le trou réduit (232) est un trou cylindrique de positionnement.

5. Structure de porte-outil selon la revendication 1, **caractérisée par le fait que** le trou réduit (232) est en forme d'arc de cercle.

6. Structure de porte-outil selon la revendication 1, **caractérisée par le fait que** la distance excentrique (e) entre le centre du trou de fraisage (33) et le centre du quatrième trou de vis intérieur (34) est d'environ 0,05-0,1mm, et que le quatrième trou de vis intérieur (34) est plus haut que le trou de fraisage (33).
